Europäisches Patentamt

European Patent Office

Office européen des brevets

(11) Publication number: **0 290 195 B1**

(12) **EUROPEAN PATENT SPECIFICATION**

(45) Date of publication of patent specification: **23.12.92**  (51) Int. Cl.⁵: **C08F 36/04**, C08F 297/04, C08F 2/08, C08J 9/14

(21) Application number: **88303829.1**

(22) Date of filing: **28.04.88**

(54) **Process for dispersion polymerizing butadiene.**

(30) Priority: **01.05.87 US 44688**

(43) Date of publication of application:
**09.11.88 Bulletin 88/45**

(45) Publication of the grant of the patent:
**23.12.92 Bulletin 92/52**

(84) Designated Contracting States:
**AT BE DE FR GB IT NL SE**

(56) References cited:
**DE-A- 1 495 814**
**DE-A- 2 728 577**
**GB-A- 1 039 256**
**US-A- 3 948 846**
**US-A- 4 418 185**

(73) Proprietor: **MOBIL OIL CORPORATION**
**150 East 42nd Street**
**New York New York 10017(US)**

(72) Inventor: **Gunesin, Binnur Zeynep**
**27 Old Stirling Road**
**Warren New Jersey 07060(US)**
Inventor: **Pindris, Paul Andrew**
**42 Carpenter Street**
**Red Bank New Jersey 07701(US)**

(74) Representative: **Colmer, Stephen Gary**
**Patent Department c/o Mobil Services Company Limited Mobil Court 3 Clements Inn**
**London WC2A 2EB(GB)**

Rank Xerox (UK) Business Services

**Description**

This invention relates to processes for dispersion polymerising conjugated dienes.

Polymers and copolymers containing polymerised conjugated dienes such as butadiene are typically prepared in polymerisation systems which include a solvent inert to the polymerisation in which the final polymer or copolymer is at least partially soluble. This creates a problem of complete solvent removal. This invention seeks to remedy this defect.

US 3948846 discloses a dispersion of block copolymer particles in a saturated aliphatic hydrocarbon diluent, the block copolymer consists of a thermoplastic tertiary butyl styrene polymer block A of molecular weight 10,000-100,000 which is soluble in the diluent, an elastomeric conjugated diene polymer block B of molecular weight 1,000-100,000 which is terminally attached to block A, and a styrene homopolymer or copolymer block C of molecular weight 20,000-1,000,000 which is terminally attached to block B, is insoluble in the diluent and forms at least part of the core of the particles. The particles may be separated from the diluent while retaining their previous molecular organization, i.e. with the insoluble block C present in the core of the particles and the thermoplastic block A remote from the core, and may be converted by hot pressing into shaped articles have impact resistance. A process is also described for produce such a particle dispersion by anionic polymerization of monomers in the hydrocarbon diluent to form successively the polymer blocks A,B and C. US 4098980 discloses a process for the non-aqueous dispersion polymerization of a conjugated diolefin monomer, for instance, butadiene or isoprene, in a liquid hydrocarbon dispersion medium, for instance, n-butane or n-pentane with a Ziegler Natta catalyst, for instance, triisobutylaluminum/titanium tetrachloride while said conjugated diolefin is in the presence of a block copolymer dispersion stabilizer. The block copolymer dispersion stabilizer is a copolymer which contains at least two blocks of polymer linked by chemical valences, at least one block (A block) is soluble in liquid organic dispersion medium and at least another block (B block) is insoluble in the dispersion medium and the stabilizer acts to disperse polymers of conjugated diolefins which are formed in the stabilizer's presence. The A block is exemplified by polyisoprene, poly(t-butyl styrene) and poly(vinyl toluene). The B block is exemplified by polystyrene, poly-($\alpha$-methyl styrene), a copolymer of styrene and isoprene, poly-(methyl methacrylate) and the like.

According, therefore, to the present invention there is provided a process for dispersion polymerisation of at least two monomers, wherein the first monomer comprises styrene or an alkyl styrene and the second monomer comprises a conjugated diene, to a block copolymer containing at least 25 weight percent of the diene, which process comprises:

conducting the polymerisation under superatmospheric pressure with an anionic polymerisation catalyst in a dispersing medium comprising $C_1$ to $C_6$ aliphatic hydrocarbon containing a major proportion of propane, n-butane or isobutane and a hydrogenated styrene or an alkyl styrene/conjugated diene block copolymeric dispersing agent effective to provide a stable dispersion, and recovering the block copolymer product.

The process is applicable to the preparation of block copolymers comprising one or more A and B blocks in which the A blocks are polymerised styrene or alkyl styrene units and the B blocks are polymerised conjugated diene units. Suitable alkyl styrenes include methyl-substituted styrenes such as para-methylstyrene. Styrenes with polar groups such as chlorine substituents cannot be used in anionic polymerisation to which this invention is particularly applicable. One or more appropriate styrene monomers can be used.

The B block comprising polymerised conjugated diene units can be formed from any anionically polymerisable conjugated diene, particularly butadiene, isoprene and dimethyl-butadiene, especially butadiene.

Suitable anionic catalysts include butyl-lithium, sec-butyl-lithium and t-butyl-lithium. The concentration of the catalyst is generally from $10^{-1}$ to $10^{-4}$ moles/100 g of monomer.

The reaction is conducted in an aliphatic hydrocarbon medium comprising a major proportion of propane, isobutane or n-butane, which is a non-solvent for the polymer.

The medium can contain alkanes having between about 4 and 6 carbon atoms, in minor amounts in addition to the propane or butane. Examples of solvents useful in conjunction with propane or butane are isobutane, pentane, isopentane, hexane, 2,2-dimethyl-butane, and petroleum ether. These solvents preferably comprise from 0 to 25 weight percent and most preferably from 0 to 15 weight percent of the dispersing medium, the major proportion being propane or butane. The preferred major component in the dispersing medium is n-butane and the preferred minor component is n-pentane. Preferably the n-pentane comprises 10 to 20 weight percent, and the n-butane comprises 80 to 90 weight percent.

The process of polymerisation can be carried out at temperatures between 30°C and about 100°C.

Because propane or butane, which are necessary components of the dispersing medium, boil well below room temperature, the reaction is conducted under super-atmospheric pressure, suitably 2 to 18 x $10^5$ Pa (2 to 18 bars), preferably 2 to 10 x $10^5$ Pa (2 to 10 bars) and most preferably 4 to 8 x $10^5$ Pa (4 to 8 bars). The highly volatile solvent system is advantageous in separating the polymer particles from the dispersing medium.

The polymeric dispersing agent which is used to maintain the polymer in suspension as it is formed is an A-B block copolymer containing blocks which are similar to or the same as the blocks in the copolymer being produced. A diblock polymer comprising hydrogenated styrene and isoprene blocks having a number average molecular weight of 140,000 and a styrene content of about 40% has been found to be particularly advantageous. The dispersing agent is generally present in amounts of about 0.1 to 5.0 weight percent of the monomers.

The polymer product may be recovered by flash drying; alternatively, the polymer product containing the dispersing medium may be transferred to an extruder and directly extruded into a foam using the dispersing medium as a foaming agent.

Generally linear block copolymers prepared in accordance with this invention have two or more (e.g., 2-10) alternating blocks of (A) units comprising polymerised styrene or an alkyl styrene and (B) units comprising polymerised conjugated diene units. Where the copolymer contains three or more blocks, it is preferred that the terminal blocks are (A) blocks. Thus, a copolymer containing five blocks has the configuration A-B-A-B-A. Block copolymers containing less than 75 weight percent of the A (styrenic) units are preferred. Thus, the B component generally comprises at least 25 weight percent of the block copolymer, and preferably 25 to 80, for example 25 to 40, weight percent.

The process of this invention is also suitable for the preparation of "star-block" or radial copolymers having a non-linear configuration such as described in U.S. Patents 3,639,517 and 4,091,053.

Because the process used for polymerisation is a dispersion (slurry) process, the high viscosity of high molecular weight polymer imposes no constraint on the molecular weight of the block copolymers. And since high molecular weight polymers have desirable physical properties, the process of this invention is advantageously used in producing polymers having high molecular weight.

Accordingly, number average molecular weights in the range of 80,000 to 200,000 are contemplated and suitable copolymers in the molecular weight range of 100,000 to 150,000 have been prepared. Although the block copolymers have high molecular weights, high polymer concentrations relative to the solvent dispersing medium in the range of 20 weight percent to 40 weight percent of polymer are readily achieved. Using polymerisation techniques, it would not be possible to obtain such high molecular weights at the high polymer concentrations readily achievable with the process of this invention because the solution viscosities would be too high.

Block copolymers having excellent physical properties, particularly elongation and impact strength, can be obtained. The polymers are useful, as such, in the preparation of containers such as cups, that can be coextruded with high impact polystyrene to achieve a glossy and clear surface, and they can be blended with crystal polystyrene to improve the physical properties of polystyrene. They exhibit excellent compatibility with polystyrene than many presently available materials used for this purpose.

In accordance with a further aspect of this invention, there is provided a foamable composition which comprises a block copolymer comprising polymerised styrene or an alkyl styrene and at least 25 weight percent of polymerised conjugated diene and, as foaming agent, a $C_4$ to $C_6$ aliphatic hydrocarbon containing a major proportion of propane, butane or isobutane.

This invention also provides a directly extruded foam formed from such a composition.

The following Examples, in which all parts are by weight unless otherwise stated, illustrate the invention.

Example 1

A 1 litre glass high pressure reactor which is controlled by 930.79kPa (135 psi) rupture disk was flushed with $N_2$ and the following ingredients added:

| 360 g | n-butane |
| 60 g | pentane |
| 40 g | styrene |
| 1.2 g | polymeric dispersant (Shell-Vis 1702*) |
| 0.1 cc | tetrahydrofuran |

\* Shell-Vis 1702 is a hydrogenated diblock copolymer of styrene and isoprene having a number average molecular weight of about 140,000 and containing 40 wt. percent styrene available from Shell.

The reactor was pressurised by $N_2$ up to 413.69 to 689.48kPa (60-100 psi) to keep solvents in liquid form depending on temperature (25°C-65°C) and 0.5 ml of 1.0 M sec-butyl lithium was added. Reaction was carried out for 45 min.- 2 hours. Later 30 g of butadiene was introduced into the pressurised reactor. Temperature was 60°C and upon reaction completion, methanol was added to terminate the polymerisation and 10 ml. of 5% solution of Halby DCTDP (a phenolic antioxidant) was added. The dispersion was stable throughout the reaction. The pressure was released and the A-B block polymer was recovered as a powder form.

Comparative Example

Using the procedure of sample I but substituting n-hexane for the n-butane/n-pentane system resulted in agglomeration of swollen polymeric particles which exhibit very high viscosity and none of the characteristics of a dispersion. At this stage, the polymerisation of further monomer is unfeasible.

Example 2

Following the procedure of Example 1 prior to termination of the reaction, additional styrene is added incrementally to add an A block resulting in an A-B-A block copolymer, and incremental amounts of styrene and butadiene are separately added in stages to produce A-B-A-B-A and A-B-A-B-A-B-A block copolymers.

**Claims**

1. A process for the dispersion polymerisation of at least two monomers, wherein the first monomer comprises styrene or an alkyl styrene and the second monomer comprises a conjugated diene, to a block copolymer containing at least 25 weight percent of the diene, which process comprises:
   conducting the polymerisation under superatmospheric pressure with an anionic polymerisation catalyst in a dispersing medium comprising $C_4$ to $C_6$ aliphatic hydrocarbon containing a major proportion of propane, n-butane or isobutane and a hydrogenated styrene or an alkyl styrene/conjugated diene block copolymeric dispersing agent effective to provide a stable dispersion, and recovering the block copolymer product.

2. A process according to claim 1 wherein the dispersing medium comprises n-butane and from 0 to 25 weight percent of pentane.

3. A process according to claim 2 wherein the dispersing medium comprises n-butane and from 10 to 20 weight percent of pentane.

4. A process according to any preceding claim wherein the pentane comprises n-pentane.

5. A process according to any preceding claim wherein the dispersing agent comprises a hydrogenated styrene/isoprene block copolymer.

6. A process according to any preceding claim which is conducted at pressures from 2 to 10 x $10^5$ Pa (2 to 10 bars).

7. A process according to any preceding claim wherein the catalyst comprises sec-butyl lithium.

8. A process according to any preceding claim wherein the polymer product containing the dispersing medium is transferred to an extruder and directly extruded into a foam by using the dispersing medium as a foaming agent.

9. A process according to any preceding claim wherein the polymer product is recovered by flash drying.

10. A process according to any of claims 1 to 9 wherein the polymer product comprises a block copolymer containing 3 or more alternating A and B units where (A) is polymerised styrene or alkyl styrene units and (B) is polymerised conjugated diene units.

11. A process according to any of claims 1 to 9 wherein the polymer product comprises a star-block copolymer comprising (A) polymerised styrene or alkyl styrene units and (B) polymerised conjugated diene units.

12. A foamable composition which comprises a block copolymer comprising polymerised styrene or an alkyl styrene and at least 25 weight percent of polymerised conjugated diene and, as foaming agent, a $C_4$ to $C_6$ aliphatic hydrocarbon containing a major proportion of propane, butane or isobutane.

13. A foamable composition according to claim 12 wherein the co-polymer is defined in 10 or 11.

14. A directly extruded foam formed from a composition according to claim 12 or 13.

**Patentansprüche**

1. Verfahren zur Dispersionspolymerisation von mindestens zwei Monomeren, worin das erste Monomer Styrol oder Alkylstyrol und das zweite Monomer ein konjugiertes Dien enthält, zur Herstellung eines Blockcopolymers mit einem Gehalt an mindestens 25 Gew.-% an dem Dien, gekennzeichnet durch

Durchführen der Polymerisation unter überatmosphärischem Druck mit einem anionischen Polymerisationskatalysator in einem Dispersionsmedium, das einen $C_4$- bis $C_6$-aliphatischen Kohlenwasserstoff, der einen Hauptanteil an Propan, n-Butan oder Isobutan und ein eine stabile Dispersion bewirkendes Dispergiermittel in Form eines Blockcopolymers aus einem hydrierten Styrol oder einem Alkylstyrol und einem konjugierten Dien enthält, sowie Gewinnen des als Produkt entstehenden Blockcopolymers.

2. Verfahren nach Anspruch 1, worin das Dispersionsmedium n-Butan und 0 bis 25 Gew.-% Pentan enthält.

3. Verfahren nach Anspruch 2, worin das Dispersionsmedium n-Butan und 10 bis 20 Gew.-% Pentan enthält.

4. Verfahren nach einem der vorstehenden Ansprüche, worin das Pentan n-Pentan enthält.

5. Verfahren nach einem der vorstehenden Ansprüche, worin das Dispergiermittel ein Blockcopolymer aus einem hydrierten Styrol und Isopren enthält.

6. Verfahren nach einem der vorstehenden Ansprüche, das bei Drücken von $2 \times 10^5$ bis $10 \times 10^5$ Pa (2 bis 10 bar) durchgeführt wird.

7. Verfahren nach einem der vorstehenden Ansprüche, worin der Katalysator sec.-Butyllithium enthält.

8. Verfahren nach einem der vorstehenden Ansprüche, worin das das Dispersionsmedium enthaltende Polymerprodukt in einen Extruder überführt und unter Verwendung des Dispersionsmediums als Schäumungsmittel direkt zu einem Schaum extrudiert wird.

9. Verfahren nach einem der vorstehenden Ansprüche, worin das Polymerprodukt durch Entspannungstrocknung gewonnen wird.

10. Verfahren nach einem der Ansprüche 1 bis 9, worin das Polymerprodukt ein Blockcopolymer mit drei oder mehr alternierenden Einheiten A und B enthält, von denen (A) Einheiten aus polymerisiertem Styrol oder Alkylstyrol und (B) Einheiten aus polymerisiertem konjugierten Dien darstellen.

**11.** Verfahren nach einem der Ansprüche 1 bis 9, worin das Polymerprodukt ein Stern-Block-Copolymer mit einem Gehalt an (A) Einheiten aus polymerisiertem Styrol oder Alkylstyrol und (B) Einheiten aus polymerisiertem konjugierten Dien enthält.

**12.** Verschäumbare Zusammensetzung mit einem Gehalt an einem Blockcopolymer, enthaltend polymerisiertes Styrol oder Alkylstyrol und mindestens 25 Gew.-% eines polymerisierten konjugierten Diens sowie als Schäumungsmittel einen $C_4$- bis $C_6$-aliphatischen Kohlen-asserstoff, der einen Hauptanteil an Propan, Butan oder Isobutan enthält.

**13.** Verschäumbare Zusammensetzung nach Anspruch 12, worin das Copolymer gemäß Anspruch 10 oder 11 definiert ist.

**14.** Direkt extrudierter Schaum, gebildet aus einer Zusammensetzung gemäß Anspruch 12 oder 13.

**Revendications**

**1.** Un procédé pour la polymérisation en dispersion d'au moins deux monomères dans lequel le premier monomère est formé de styrène ou d'un alkylstyrène et le second monomère est formé d'un diène conjugué, pour l'obtention d'un copolymère bloc contenant au moins 25% en poids du diène, caractérisé en ce qu'il comprendre les étapes:
- mettre en oeuvre la polymérisation sous une pression supérieure à la pression atmosphérique en présence d'un catalyseur de polymérisation anionique, dans un milieu de dispersion formé d'un hydrocarbure aliphatique en $C_4$ à $C_6$ contenant une proportion majeure de propane, de n-butane et d'isobutane et un agent de dispersion consistant en un copolymère bloc styrène ou alkylstyrène hydrogéné/diène conjugué, efficace pour fournir une dispersion stable. et
- récupérer le copolymère bloc produit.

**2.** Un procédé selon la revendication 1, caractérisé en ce que le milieu de dispersion contient du n-butane et de 0 à 25% en poids de pentane.

**3.** Un procédé selon la revendication 2, caractérisé en ce que le milieu de dispersion contient du n-butane et de 10 à 20% en poids de pentane.

**4.** Un procédé selon l'une quelconque des revendications précédentes, caractérisé en ce que le pentane consiste en n-pentane.

**5.** Un procédé selon l'une quelconque des revendications précédentes, caractérisé en ce que l'agent de dispersion est formé d'un copolymère bloc styrène hydrogéné/isoprène.

**6.** Un procédé selon l'une quelconque des revendications précédentes, caractérisé en ce qu'il est mis en oeuvre à une pression comprise entre 2 et 10 x $10^5$ Pa (2 à 10 bars).

**7.** Un procédé selon l'une quelconque des revendications précédentes, caractérisé en ce que le catalyseur est formé de sec-butyllithium.

**8.** Un procédé selon l'une quelconque des revendications précédentes, caractérisé en ce que le polymère produit contenant le milieu de dispersion est transféré vers un appareil d'extrusion ou directement extrudé sous la forme d'une mousse grâce à l'emploi du milieu de dispersion agissant en tant qu'agent de moussage.

**9.** Un procédé selon l'une quelconque des revendications précédentes, caractérisé en ce que le polymère produit est récupéré par séchage flash.

**10.** Un procédé selon l'une quelconque des revendications 1 à 9, caractérisé en ce que le polymère produit comprend un copolymère contenant 3 ou davantage d'unités A et B alternées dans lesquelles A est formé d'unités de styrène ou d'alkylstyrène polymérisées et B est formé d'unités de diène conjugué polymérisées.

**11.** Un procédé selon l'une quelconque des revendications 1 à 9, caractérisé en ce que le polymère produit consiste en un copolymère bloc étoilé dans lequel A est formé d'unités de styrène ou d'alkylstyrène polymérisées et B est formé d'unités de diène conjugué polymérisées.

**12.** Une composition susceptible de donner lieu à un moussage qui comprend un copolymère bloc formé de styrène ou d'un alkylstyrène polymérisé et d'au moins 25% en poids d'un diène conjugué polymérisé et, en tant qu'agent de moussage, un hydrocarbone aliphatique en $C_4$ à $C_6$ contenant une proportion majeure de propane, de butane ou d'isobutane.

**13.** Une composition susceptible de former une mousse selon la revendication 12, caractérisée en ce que le copolymère est tel que défini dans la revendication 10 ou la revendication 11.

**14.** Une mousse directement obtenue par extrusion de la composition selon la revendication 12 ou 13.